# EUROPEAN PATENT APPLICATION

(11) **EP 2 760 181 A1**
(43) Date of publication of application: **30.07.2014**
(21) Application number: 14152524.6
(22) Date of filing: 24.01.2014
(51) Int. Cl.: H04L 29/06, H04L 12/939, H04L 12/24, H04L 12/703

(54) **Methods and systems for providing redundancy in data network communications**

(30) Priority: 25.01.2013 US 201361757065 P
(71) Applicant: ARXCEO Corporation, Atlanta, GA 30309 (US)
(72) Inventor: Fukuda, Naohisa, Kitasaku-gun, Nagano 389-0115 (JP); Sanda, Frank Seiji, Minato-ku, Tokyo 107-0052 (JP); Yoda, Nobuhisa, Centennial, CO 80111 (US); Kudo, Yasushi, Marietta, GA 30062 (US); Somers, Jonathan, Jacksonville, FL 32258 (US); Winn, James Marcus, Atlanta, GA 30306 (US)
(74) Representative: Harris, Ian Richard

(57) **Abstract**

Methods and systems are provided for providing redundancy in data network communications. Data traffic on a first network channel used for the data communication between the two or more host systems can be monitored to obtain one or more attributes associated with the data traffic. Based on the data attributes, it may be determined whether one or more anomalies associated with the attributes exist. If so, the anomalies may be used to determine whether they are indicative of an imminent or current network event or condition. In response to a determination that the one or more anomalies are indicative of the event or condition, a second network channel may be selected for the data communication between the two or more host systems.

## Description

### CROSS-REFERENCE

This application claims the benefit of U.S. Provisional Application No. 61/757,065, filed January 25, 2013, which application is incorporated herein by reference in its entirety.

### BACKGROUND OF THE INVENTION

Wide-area data communications networks are unreliable for a variety of reasons. Dial-up and DSL communications can be disrupted if a downed tree or limb damages pole-mounted lines. Cellular and other radio network performance can degrade proportional to distance between antennas, weather conditions, and other environmental factors. Power failures, electrical noise, or congestion due to excessive traffic can interrupt communications between endpoints of all types. Some of these interruptions can be quite prolonged, but even momentary or transitory events can disrupt digital communications, particularly if the event is repetitive.

In addition to these unintentional disruptions in network traffic, communications networks are vulnerable to intentional disruptions as well. Network and device vulnerability scanning, Denial of Service attacks, and Man-in-the-Middle hijacking attempts - even if unsuccessful - are all capable of interrupting normal communications traffic.

The most common communication faults result in data errors that are easily detected, and prior arts exist to detect and compensate for such errors. However, there are many other events that do not result in a hard error, yet still impede data communications to the point of being unusable. Latency can suffer if packets are not acknowledged in time; even though one-way performance may still be good, the round-trip time for a transaction may be unacceptable. A network component or infrastructure fault can occur between two endpoints, resulting in a loss of data flow even though each network endpoint believes its local network segment is fine. Momentary interruptions, such as those due to interference from other electronic devices or impulses induced during electrical storms, may cause sporadic problems that disrupt the normal pattern of a transactional communications session. While a bit error in a packet can be easily detected, the complete absence of an expected packet or sequence of packets is not so easy to detect. Furthermore, security intrusions can disrupt communications even when they adhere strictly to the protocol of a channel.

In some high-reliability applications, it is desirable to use multiple redundant channels, and to select from among them when the integrity of at least one channel is compromised. By using a plurality of networks, maintained by different vendors or operators and using different physical networks, network types, or topologies, the reliability and trustworthiness of data exchange between two endpoints can be greatly improved.

Existing devices such as switches, bridges, and routers capable of interconnecting more than one network type are commonplace. Some such existing devices are capable of moving traffic from primary to alternate channels when the devices detect an error occurring in areas such as loss of bearer signals.

But what if an error does not occur? Hostile traffic can be completely successful, or can disrupt traffic even if unsuccessful; either case does not constitute an error in the traditional sense. Congestion may lead to poor performance, but is not an error. Transitory noise leading to lost packets may be intolerable, and can even be repetitive, but is not an error. Accordingly, there is a need to perform network channel selection even though there is not necessarily a hard error on a channel.

### SUMMARY OF THE INVENTION

Methods and systems are provided for providing redundancy in data network communications. According to an aspect of the invention, a computer-implemented method for providing data communication between two or more host systems is provided, said method under the control of one or more computer systems configured with executable instructions. The method can comprise monitoring data traffic on a first network channel used for the data communication between the two or more host systems to obtain one or more attributes associated with the data traffic, detecting one or more anomalies associated with the one or more attributes, determining whether the one or more anomalies are indicative of an event or condition, and in response to a determination that the one or more anomalies are indicative of the event or condition, selecting a second network channel for the data communication between the two or more host systems. The one or more attributes associated with the data traffic may include, but are not limited to, timing, addresses, protocols, or sequences of data packets of the data traffic.

According to another aspect of the invention, one or more non-transitory computer-readable storage media are provided, having stored thereon executable instructions that, when executed by one or more processors of a computer system, cause the computer system to at least monitor data traffic on a first network channel used for the data communication between the two or more host systems to obtain one or more attributes associated with the data traffic, detect one or more anomalies associated with the one or more attributes, determine whether the one or more anomalies are indicative of an imminent or current event or condition, and in response to a determination that the one or more anomalies are indicative of the event or condition, select a second network channel for the data communication between the two or more host systems.

According to another aspect of the invention, a computer system is provided for providing data communication between two or more host systems. The computer system can comprise one or more processors and memory, including instructions executable by the one or more processors to cause the computer system to at least monitor data traffic on a first network channel used for the data communication between the two or more host systems to obtain one or more attributes associated with the data traffic, detect one or more anomalies associated with the one or more attributes, determine whether the one or more anomalies are indicative of an event or condition, and in response to a determination that the one or more anomalies are indicative of the event or condition, select a second network channel for the data communication between the two or more host systems.

In some embodiments, the one or more attributes associated with the data traffic include timing, addresses, protocols, or sequences of data packets of the data traffic. Detecting the one or more anomalies may include examining a pattern associated with at least one of one or more attributes. Determining whether the one or more anomalies are indicative of the event or condition may include correlating the one or more anomalies with the event or condition.

In some embodiments, the event or condition may be imminent or currently occurring. The event or condition may include a loss of acceptable performance of the first network channel, unsuitable network condition for an application running on one of the two or more host systems, a security threat to one of the two or more host systems, or the like.

In some embodiments, the methods described herein further comprise, in response to the determination that the one or more anomalies are indicative of the event or condition, selecting two or more network channels for data communication between the two or more host systems based on a type of the data traffic.

In some embodiments, at least one of the two or more host systems comprises a single computer or terminal device. In some embodiments, at least one of the two or more host systems comprises a network of two or more computers or terminal devices.

In some embodiments, the methods described herein further comprise, in response to a determination that the one or more anomalies are indicative of the event or condition, disabling use of the first network channel. Disabling use of the first network channel may include shutting down, discarding data packets of the first network channel, or the like.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:
FIG. 1 depicts an example network selection system 100, in accordance with an embodiment of the present invention.
FIG. 2 depicts another example network selection system 200, in accordance with an embodiment of the present invention.
FIG. 3 depicts another example network selection system 300, in accordance with an embodiment of the present invention.
FIG. 4 depicts another example network selection system 400, in accordance with an embodiment of the present invention.
FIG. 5 depicts another example network selection system 500, in accordance with an embodiment of the present invention.
FIG. 6 depicts an example computing device 600 for implementing aspects of the present invention, in accordance with an embodiment of the present invention.
FIG. 7 depicts an example process 700 for implementing network selection, in accordance with an embodiment of the present invention.

### DETAILED DESCRIPTION OF THE INVENTION

The present invention discloses methods and systems for selecting optimal communication channels or networks for data communication when anomalies are detected in network traffic. Such anomalies can indicate, for example, impending network failure, unsuitable network condition for a given application, imminent or current loss of acceptable performance for a network channel, imminent or current security threat or security breach to hosts using the communication channel or network, and the like. In some embodiments, the network selection system can include a detection module which is capable of identifying anomalies in communications traffic; a classification module which decides whether or not a specific anomaly is indicative of a threat to network performance or security; and a switching module which is used to decide which traffic should be directed to which communications channel or channels.

In some embodiments, the detection module, the classification module, and the switching module may be implemented by one or more integrated or distributed computing devices or systems. In some embodiments, the classification module, and the switching module may be incorporated into a single device or more than one device. Some or all of such devices may be separate from, and invisible to, the communications channels and the hosts. "Invisible" in this case means that neither channels nor hosts are aware that the invention is present. Typically, few or no configuration changes or other modifications are needed for a host system to use the invention. In other embodiments, the devices implementing the detection module, classification module and/or switching module may be integral and/or visible to the communication channels and/or hosts.

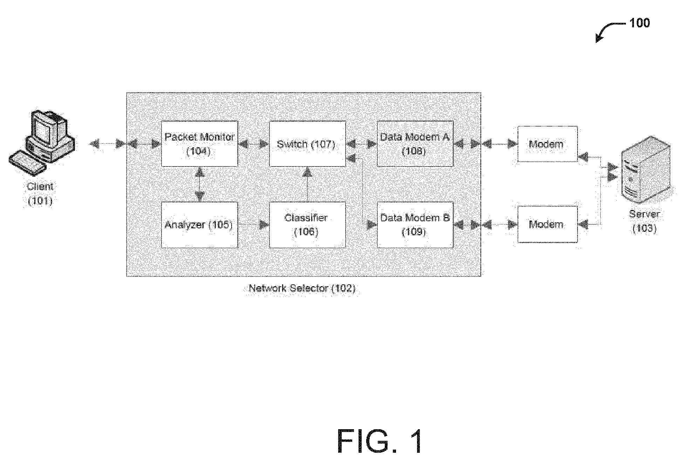

FIG. 1 depicts an example network selection system, in accordance with an embodiment of the present invention. The network selection system allows two or more host systems to communicate reliably via one or more communication or network channels based on network conditions. For example, as illustrated in FIG. 1, a client 101 communicates with a server 103 via the a network selector 102 that is capable of dynamically selecting one or more network channels from or switching between a plurality of available network channels based on network conditions. Each of the host systems (e.g., the client or the server) can include one or more computing devices, such as desktop computers, server computers, mainframe computers, mobile devices, cellular phones, smart phones, tablet devices, smart TVs, set-top boxes, and the like, that are capable of transmitting and/or receiving data. In an embodiment, client 101 can communicate using either of two physical network connections, either or both of which may be analog dial-up connections, DSL connections, wireless cellular connections, leased lines, microwave links, or other physical network types. Access to each physical network is typically established through some sort of data communications equipment (DCE), most commonly a modem of some type, represented in FIG. 1 as data modem A 108 and data modem B 109.

As discussed above, aspects of the network selection system can be implemented as a single, integrated device or appliance, such as a network selector 102. Network data packets from and to client 101 can pass thru the network selector 102. Under normal conditions, the network selector 102 conveys the packets from the client 101 to data modem A 108, which transmits them to the server 103. Response packets from the server 103 are sent to data modem A 108 of the network selector 102, which passes them on to client 101.

In some embodiments, data traffic on a given network channel used for the data communication between the two or more host systems are monitored to obtain one or more attributes associated with the data traffic. For example, the data packets of the data traffic can be processed by a detection module as they pass through the network selector 102. The data traffic monitoring can be one-way or two-way. For example, in an embodiment, only the data traffic from the client to the server is monitored. In another embodiment, only the data traffic from the server to the client is monitored. In yet another embodiment, the two-way data traffic from the client to the server and from the server to the client is monitored.

In some embodiments, the detection module may include a packet monitor 104 and a packet analyzer 105. The packet monitor 104 can be configured to examine each transmitted and received packet individually for specific attributes, which may include, but are not limited to: time of arrival of the packet, packet protocol types, packet lengths, packet source addresses, packet destination addresses, packet source and destination socket numbers, if applicable, packet priorities, Quality of Service (QoS) requirements, packet sequence numbers, and/or other attributes. Some or all of such attributes may govern the handling and disposition of the packets. In a preferred embodiment, in the interest of speed and efficiency, the packet monitor typically does not examine the actual data payloads of a given packet.

Packet analyzer 105 can be configured to examine collections of packets in the context of those packets that have been transmitted and/or received previously. Examples of attributes examined by packet analyzer 105 include, but are not limited to: the interval of time between successive packets, either of any type, or from similar addresses, or using similar protocols; number of consecutive retries of otherwise identical packets; compliance with established protocol guidelines; and round-trip times between data transmission and acknowledgement receipt or between other events. In some embodiments, the packet monitor and the packet analyzer may be implemented by the same or separate components, processes, computer devices, and/or computer systems.

In some embodiments, patterns associated with the attributes obtained by the detection module can be analyzed to detect one or more anomalies associated with the attributes, if any. For example, one or more patterns associated with one or more attributes may be examined to determine if they deviate from normal or expected patterns. If the transmitted and/or received packets conform to normal communications traffic patterns, then the detection module may take no action. However, if the transmitted and received packets do not conform to normal traffic patterns, the detection module may report the detected anomaly or anomalies, along with details associated with the anomaly or anomalies, to the classifier 106. Detection of anomalies may be performed by using a signature database, by using rules processing, by using adaptive learning strategies, or by other methods. In various embodiments, any one or more of the modules discussed herein may implement any pattern detection, pattern recognition and/or machine learning techniques such as statistical analysis, fuzzy logic, neural networks, and the like.

Types of anomalies that the detection module can detect and/or report to the classifier may include, but are not limited to: unusually rapid or excessive numbers of repeated packets; absence of expected packets; abnormally high rates of packets, indicating network congestion; packets addressed to a port or socket which is not in use, potentially indicating a scan or attack; and data packets received outside the context of a communications session, indicating a failure to conform to established network protocols; and the like.

In some embodiments, the detected anomalies may be indicative of one or more imminent or current events or conditions. Some or all such events or conditions may be undesirable but may not necessarily qualify as or result in hard "errors" that typically require reporting to the hosts of the data communication system (e.g., the client and/or the server). In some embodiments, determining whether the one or more anomalies are indicative of the event or condition includes correlating the one or more anomalies with the event or condition. Examples of such events or conditions may include impending network failure, unsuitable network condition for a given application, imminent or current loss of acceptable performance for a network channel, imminent or current security threat or security breach to hosts using the communication channel or network, and the like. For example, the anomalies may indicate an impending or current network failure of the network channel accessed by data modem A 108.

Classifier 106 can be configured to examine reports about detected anomalies from analyzer 105, determine whether the one or more anomalies are indicative of an impending or current event or condition, and if so, what actions to take, if any. In a typical embodiment, the actions include selecting one or more alternative communication channels or networks that are different than the current communication channel or network. For example, in an embodiment, when an anomaly indicative of an event or condition is detected on the communication channel associated with data modem A 108, switch 107 can be instructed to cease transmission and reception of packets from data modem A 108 and commence transmission and reception of packets from data modem B 109. Other actions may be taken in response to the determination that the one or more anomalies are indicative of the event or condition including disabling the communication or network channel currently in use (e.g., by shutting down the channel, discarding data packets associated with the channel, and the like). Other actions may include, but are not limited to: ceasing communications on data modem B 109 and returning to the use of data modem A 108; powering up, initializing, registering, dialing, acquiring an IP address, or otherwise preparing a modem for use; powering down, deregistering, hanging up, releasing an IP address, or otherwise placing a modem on standby; logging an error to a log file for future reference; transmitting a network packet to a monitoring host; sending an SMS notification or other alert to a network administrator; or the like.

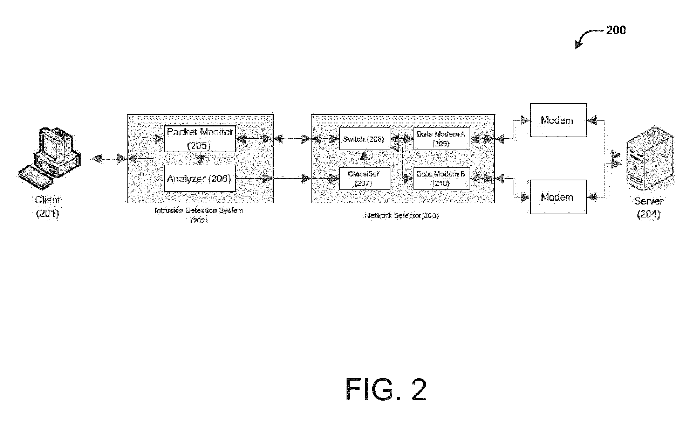

As discussed above, the functionalities of the detection module, the classification module, and the switching module may be implemented by a single physical appliance such as illustrated by FIG. 1. Alternatively, such functionalities may be implemented by two, three or more computing devices. FIG. 2 illustrates an embodiment in which the components implementing the present invention are distributed among multiple devices, including a Network Intrusion Detection System (IDS). Such an IDS may include a commercial readily-available IDS or a custom built IDS. In the illustrated example, functionalities of the detection module are implemented by the IDS 202. The IDS 202 incorporates the functionalities of a packet monitor 205 and analyzer 206 to implement the detection module. Additionally, it may implement other functionalities, for example, to achieve its normal mode of operation.

In some embodiments, the analyzer 206 of the IDS 202 may report network anomalies indicative of events or conditions to a classifier 207 within a simplified network selector 203. The network selector 203 of FIG. 2 is simplified compared with the network selector 102 of FIG. 1 because the network selector 203 of FIG. 2 does not implement the detection module. A dedicated communications channel may be used to convey such reports, as shown in FIG. 2, or the reports may be conveyed using data packets that are transmitted on the same channel as all other network traffic, for example, using SNMP protocol. The functionalities of classifier 207, switch 208, and modems 209 and 210 may be substantially similar to those of the classifier 106, switch 107, and modems 108 and 109 described in FIG. 1.

In various embodiments, any or any combination of the components discussed above may be implemented by an IDS, an Intrusion Prevention System (IPS), a combination of both, a firewall (e.g., an intelligent firewall), a purpose-built device, or the like. For example, the detection module may be implemented by an IDS, an IPS, a combination of both, a firewall or a custom-built device; while the other components are implemented by other devices. As another example, both the detection and classification module can be implemented by an IDS, an IPS, or a firewall; while the switching module is implemented by its own appliance. In other embodiments, the detection module, the classification module and/or other modules may be implemented by the physical hardware and/or a logical software component of the client and/or server.

In some embodiments, the switching module may be embodied within or implemented by a separate device such as a bridge, switch, router, gateway, multimedia modem, or other communications hub, or a hardware or software component thereof.

In various embodiments, the number of physical connections is not limited to two; likewise, the DCE need not communicate directly with corresponding equipment on the server. For example, more than two communication or network channels may be provided for redundancy. As another example, the client and server can communicate with each other via a network such as a public network (e.g., the Internet).

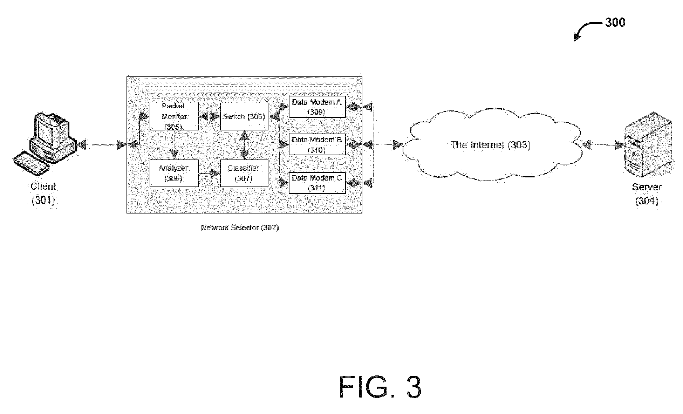

FIG. 3 depicts an embodiment in which a network selector 302 containing three modems 309, 310, and 311 is used to provide redundancy for data communication, and in which the modems communicate with server 304 over the public Internet 303. In various embodiments, the modems and connection types may be homogenous (for example, all three may be wireless cellular modems supported by different carrier vendors) or heterogeneous (for example, one may be a DSL modem, one may be a GSM cellular modem, and one may be a CDMA cellular modem). In various embodiments, the network 303 may include a public network, a Local Area Network (LAN), a Wide Area Network (WAN), a cellular network, a wireless network, or the like. In various embodiments, one or more networks of the same or different types may be used for the communication between the client and the server. For example, in an embodiment, the client may communicate to the network selector 302 via a network (e.g., Wi-Fi) and the network selector may communicate with the server directly or via the network 303. In some embodiments, functionalities of some components of the network selection systems may be similar to those described in connection with FIG. 1.

The number, type and/or configuration of the host systems utilizing the network selection system of the present invention may not be limited to a single client and server. Instead, each of the host systems may include one or more computer or terminal devices. For example, a host system may include a plurality of networked devices such as in a LAN environment. As such, the network selection system can provide two or more channels of redundancy to an entire sub-network of client devices. The clients may be of the same or different types and configured to communicate with the server or servers over a network (e.g., the Internet).

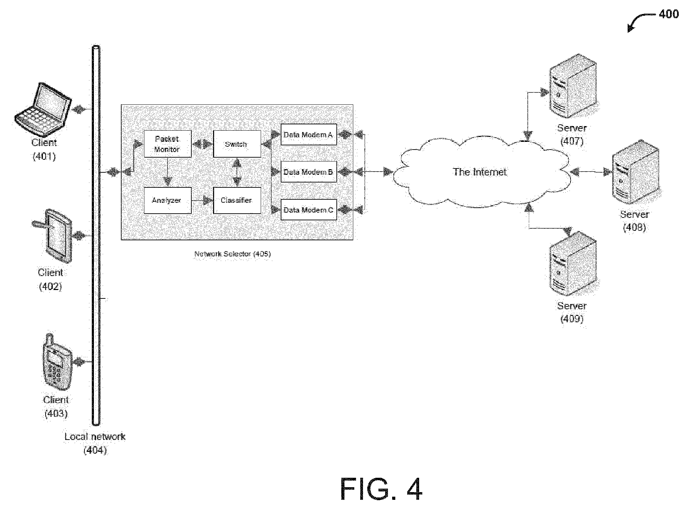

FIG. 4 depicts the network selector 405 used to provide redundant communications to a local network 404 of clients 401, 402, 403. The client devices may be heterogeneous, as shown in FIG. 4. For example client devices may include a laptop computer 401, a cellular phone or smart phone 402, a tablet device 403, a desktop computer, a smart TV, and the like. Alternately, the client devices may be homogenous. For example, the client devices may comprise a network composed entirely of desktop computers. Similarly, the connections between the clients and the network selector may be homogenous, such as using only wireless connections (e.g., Wi-Fi), or heterogeneous, such as using mixture of wireless connections (e.g., Wi-Fi) and wired connections (e.g., Ethernet). Furthermore, the client devices may communicate with a variety of servers (407, 408, 409), which may include, but are not limited to, mail servers, web servers, application servers, storage servers, financial transaction processors, and content servers. In some embodiments, the servers may be configured to provide cloud-based services. There is no requirement that servers even be a component of the system served by the network selector; the system could simply be a large distributed cloud of peer-to-peer clients, in which network selectors are used to provide high reliability of communications among subnetworks of clients, using one network selector per subnetwork.

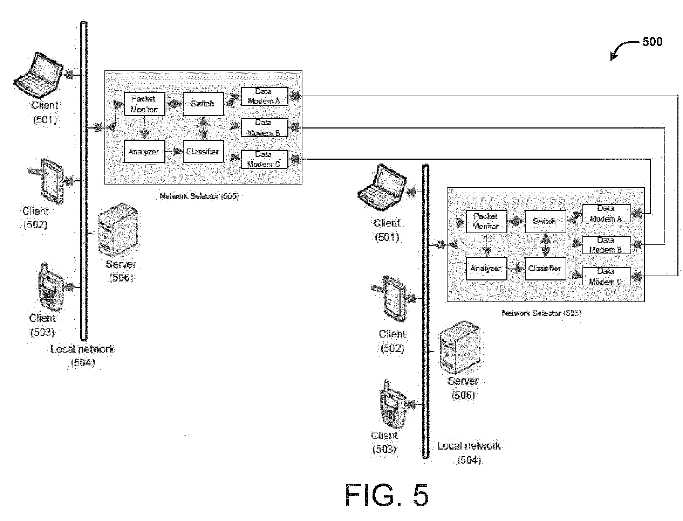

FIG. 5 depicts an embodiment where one network of clients is connected to a network selector, which in turn connects to another network selector that services another network of clients, typically via a network (e.g., the public Internet). Such a configuration may be used, for example, to provide communication between two physically distant offices that need to be continuously joined privately and digitally, as with a leased line or a virtual private network (VPN) over the Internet, and using network selectors on each end to provide high reliability.

In some embodiments, heterogeneous network channels typically have different levels of performance according to bitrate, latency, cost, and other criteria. It is possible to configure a network selector to distribute traffic among the various channels according to the requirements of the type of traffic, such that highly critical data is communicated as quickly as possible on the fastest available channel, even if it is relatively costly, while lower priority data is communicated using the most economical channel. Loss of a high-speed channel could then cause traffic normally destined for that channel to be routed to an alternate channel, while loss of a low-speed channel might result in communications of that type being suspended until the channel can be reliably restored.

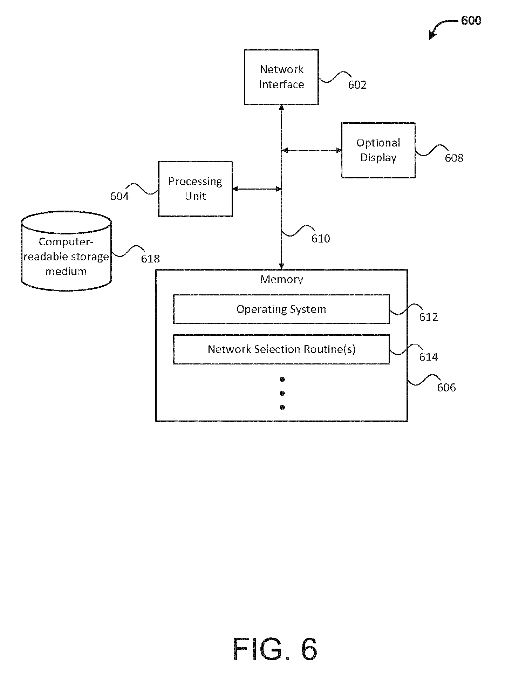

FIG. 6 depicts an example computing device 600 for implementing aspects of the present invention. In a different embodiment, the computer device 600 may be configured to implement a network selector, a client device, a server device, or components thereof. In other embodiments, computing device 600 may include many more components than those shown in FIG. 6. However, it is not necessary that all of these components be shown in order to disclose an illustrative embodiment.

As shown in FIG. 6, computing device 600 includes a network interface 602 for connecting to a network such as discussed above. In various embodiments, the computing device 600 may include one or more network interfaces 602 for communicating with one or more types of networks such as the Internet, wireless networks, cellular networks, and any other network.

In an embodiment, computing device 600 also includes one or more processing units 604, a memory 606, and an optional display 608, all interconnected along with the network interface 602 via a bus 610. The processing unit(s) 604 may be capable of executing one or more methods or routines stored in the memory 606. The display 608 may be configured to provide a graphical user interface to a user operating the computing device 600 for receiving user input, displaying output, and/or executing applications. In some cases, such as when the computing device 600 is a server or a network device, the display 608 may be optional.

In some embodiments, the memory 606 can include a non-transitory computer readable medium or transitory computer readable medium. For example, the memory 606 can include random access memory ("RAM"), read only memory ("ROM"), disk drive, floppy disc, tape, DVD/CD-ROM drive, memory card, USB flash drive, solid state drive (SSD) or the like. The memory 606 can be configured to store data received from the processing unit, an input device (not shown), or other modules of the computing device. The memory 606 may also store program code or program instructions executable by the processing unit to perform any suitable embodiments of the methods described herein. For example, the program code can include an operating system 612, one or more network selection routines 614, and the like. In some embodiments, program code may be located into the memory 606 using a drive mechanism associated with a non-transient computer readable storage medium such as discussed above. In other embodiments, the program code may alternatively be loaded via the network interface 602, rather than via a non-transient computer readable storage medium 618.

In some embodiments, the computing device 600 also communicates via bus 610 with one or more local or remote databases or data stores such as an online data storage system via the bus 610 or the network interface 602. The bus 610 may comprise a storage area network ("SAN"), a high-speed serial bus, and/or via other suitable communication technology. In some embodiments, such databases or data stores may be integrated as part of the computing device 600.

In some embodiments the invention is implemented as logic on a gate array, an application-specific integrated circuit (ASIC), or on a digital signal processor.

Although preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims and their equivalents be covered thereby.

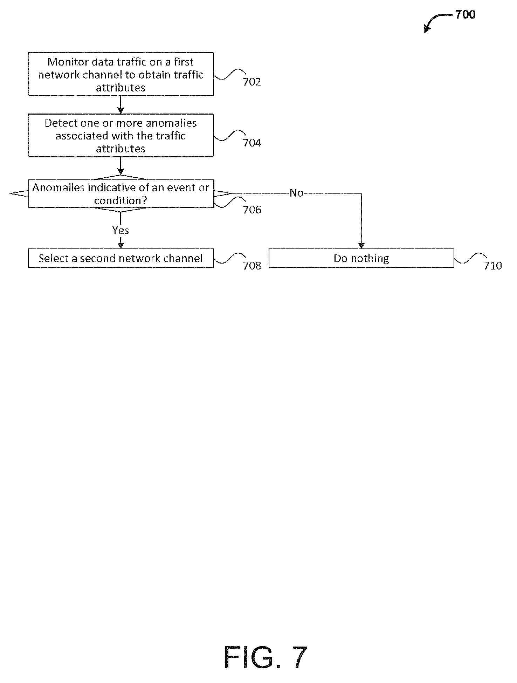

FIG. 7 illustrates an example process 700 for implementing aspects of the present invention, in accordance with an embodiment. Aspects of the process 700 may be performed by the network selection systems such as discussed in connection with FIGs. 1-5, or any components thereof. Some or all aspects of the process 700 (or any other processes described herein, or variations and/or combinations thereof) may be performed under the control of one or more computer/control systems configured with executable instructions and may be implemented as code (e.g., executable instructions, one or more computer programs or one or more applications) executing collectively on one or more processors, by hardware or combinations thereof. A program product may comprise the code, for example in the form of a computer program comprising a plurality of instructions executable by one or more processors. The program product may comprise a computer-readable storage medium on which the code is stored. The computer-readable storage medium may be non-transitory. The order in which the operations are described is not intended to be construed as a limitation, and any number of the described operations may be combined in any order and/or in parallel to implement the processes.

In some embodiments, the process 700 includes monitoring 702 the data traffic on a first network channel used for the data communication between the two or more host systems to obtain one or more attributes associated with the data traffic. Such monitoring may be performed for one-way or two-way data traffic. The traffic attributes may be associated with data packets. For example, the attributes may be related to the timing, address, protocol, sequence or other attributes of the data packets. In various embodiments, the traffic attributes may be examined individually and/or in the context of other packets (e.g., previously examined packets).

The attributes may be used to detect 704 any anomalies in the attributes, such as a deviation from a pattern of one or more attributes. Examples of such anomalies may include unusually rapid or excessive numbers of repeated packets; absence of expected packets; abnormally high rates of packets, indicating network congestion; packets addressed to a port or socket which is not in use, potentially indicating a scan or attack; and data packets received outside the context of a communications session, indicating a failure to conform to established network protocols; and the like. The attributes may be examined to detect if there is any anomaly associated with the attributes.

The process 700 can include determining 706 whether the detected anomalies are indicative of an event or condition. The event or condition may be impending (e.g., imminent) or currently occurring. Some or all such events or conditions may not necessarily qualify as or result in hard "errors" that typically require reporting the hosts of the data communication system (e.g., the client and/or the server). In some embodiments, determining whether the one or more anomalies are indicative of the event or condition includes correlating the one or more anomalies with the event or condition. Examples of such events or conditions may include impending network failure, unsuitable network conditions for a given application, imminent or current loss of acceptable performance for a network channel, imminent or current security threat or security breach to hosts using the communication channel or network, and the like.

If it is determined that the anomalies are indicative of an event or condition, the process 700 can include selecting 708 a second network channel. Other actions may be taken as appropriate such as shutting down, discarding packets of or otherwise disabling the first network channel for a period of time. The period of time may be a predetermined, fixed amount or determined based on the network conditions. For example, the first network channel may be re-enabled when the network condition on the first network channel improves, when the first network channel is determined to be suitable for the current traffic requirement or network environment, or the like. Otherwise, if it is determined that the anomalies are not indicative of an event or condition, in an embodiment, no action is taken 710.

While preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims and their equivalents be covered thereby.

## Claims

1. A computer-implemented method for providing data communication between two or more host systems, said method under the control of one or more computer systems configured with executable instructions and comprising:
monitoring data traffic on a first network channel used for the data communication between the two or more host systems to obtain one or more attributes associated with the data traffic;
detecting one or more anomalies associated with the one or more attributes;
determining whether the one or more anomalies are indicative of an event or
condition; and
in response to a determination that the one or more anomalies are indicative of the event or condition, selecting a second network channel for the data communication between the two or more host systems.

2. The method of claim 1, wherein the one or more attributes associated with the data traffic include timing, addresses, protocols, or sequences of data packets of the data traffic.

3. The method of claim 1 or claim 2, wherein detecting the one or more anomalies include examining a pattern associated with at least one of one or more attributes.

4. The method of any one of the preceding claims, wherein determining whether the one or more anomalies are indicative of the event or condition includes correlating the one or more anomalies with the event or condition.

5. The method of any one of the preceding claims, wherein the event or condition is one of:
imminent;
currently occurring.

6. The method of any one of the preceding claims, wherein the event or condition includes a loss of acceptable performance of the first network channel, unsuitable network condition for an application running on one of the two or more host systems, or a security threat to one of the two or more host systems.

7. The method of any one of the preceding claims, further comprising, in response to a determination that the one or more anomalies are indicative of the event or condition, disabling use of the first network channel.

8. The method of claim 7, wherein disabling use of the first network channel includes shutting down the first network channel or discarding data packets of the first network channel.

9. The method of claim 7 or claim 8, wherein the first network channel is disabled for a predetermined amount of time.

10. The method of any one of claims 7 to 9, wherein the first network channel is disabled for an amount of time that is determined based on network conditions.

11. The method of any one of the preceding claims, further comprising, in response to the determination that the one or more anomalies are indicative of the event or condition, selecting two or more network channels for data communication between the two or more host systems based on a type of the data traffic.

12. The method of any one of the preceding claims, wherein at least one of the two or more host systems comprises a single computer or terminal device.

13. The method of any one of the preceding claims, wherein at least one of the two or more host systems comprises a network of two or more computers or terminal devices.

14. A program product comprising executable instructions that, when executed by one or more processors of a computer system, cause the computer system to perform the method of any one of the preceding claims.

15. A computer system for providing data communication between two or more host systems, comprising:
one or more processors; and
memory, including instructions executable by the one or more processors to cause the computer system to perform the method of any one of Claims 1 to 13.
